# EUROPEAN PATENT SPECIFICATION

(11) **EP 0 439 317 B1**
(45) Date of publication and mention of the grant of the patent: **06.03.1996**
(21) Application number: 91300457.8
(22) Date of filing: 21.01.1991
(51) Int. Cl.: B23B 27/06

(54) **Threading insert**
Gewindeschneideinsatz
Plaquette à fileter

(30) Priority: 23.01.1990 US 468564
(43) Date of publication of application: 31.07.1991
(73) Proprietor: Little, Roger Warren, Santa Fe, Texas 77510 (US)
(72) Inventor: Little, Roger Warren, Santa Fe, Texas 77510 (US)
(74) Representative: Linn, Samuel Jonathan

(56) References cited:
- DE-A- 2 052 386
- GB-A- 1 532 238
- GB-A- 2 070 472
- US-A- 3 613 197
- US-A- 3 968 549
- US-A- 4 169 690
- US-A- 4 602 897

## Description

High quality threads are commonly cut in a workpiece mounted on a lathe, by a threading insert that is held in a tool holder. The cutting edge of the insert has a limited life, such as 50 threads per cutting edge, and the life of the insert is increased by constructing it with multiple cutting edges. When a cutting edge wears out, the insert is removed and reinstalled with a new cutting edge in position, it being highly desirable that the new cutting edge lie precisely in the same position as the old edge, despite the change in insert position. The manufacturing cost for an insert is about the same no matter how many cutting edges it has, so it is desirable that each insert have as many cutting edges as possible. However, any insert, to be practical, has to allow rapid and highly precise reinstallation of the insert to present a new cutting edge, with the insert and the tool holder being of simple and rugged design. It is also desirable if the insert can be used to cut an internal thread in a hole of small diameter, as well as an external thread.

U.S. Patent 3,613,197 by Stier, describes a threading insert with eight cutting edges. His insert includes a mount portion with a screw-receiving hole for mounting on a tool holder, and four arms radiating from the mount portion, with each arm having two cutting edges. However, he precisely locates his insert on a tool holder by using locating surfaces along the opposite sides of each arm. As a result, the sides of his arms are long, resulting in only a small thickness of metal between the innermost locations on his arms and the central hole of the insert. Also, the chips generated during cutting ride along a long flat surface into a narrow area, resulting in "balling" up of the chips. A threading insert which provided many cutting edges, which was of sturdy construction and could be precisely mounted on a tool holder of simple construction, would be of considerable value.

US-A-4602897 discloses a cutting insert comprising the features of the preamble of claim 1. The insert is carried on a tool holder and borne on convex seating surfaces.

According to the invention, there is provided threading apparatus comprising an insert having a mount portion with at least three locating sides lying on the sides of an imaginary regular polygon that has an axis, said insert having a radially outwardly extending arm at each of the corners of said imaginary polygon, with each arm having an outer edge characterised in that each arm has a pair of opposite arm sides that extend in a substantially radially outward direction from the axis of said polygon; in that each locating side is flat; and in that the length of each of said flat locating sides is more than 150% of the length of each of said opposite sides of said arms.

Preferably, the apparatus further comprises a tool holder for holding the insert, the tool holder having walls forming at least two flat positioning surfaces that abut first and second of said flat insert sides and said tool holder having a clamp with a clamp surface that presses against a third of said flat insert positioning surfaces. More preferably, the tool holder has an outer end for lying adjacent to a workpiece to be threaded, and has a recess extending to said outer end; a first of said arms of said insert projects beyond said tool holder outer end, said first arm having an upper arm side forming a cutting edge for the workpiece to be threaded and a lower arm side; and said tool holder is spaced from said lower arm side to leave said lower arm side unsupported. The tool holder may include a bar and a pocket wedge mounted on said bar, said wedge having a thickness about the same as the thickness of said insert and forming said positioning surfaces, and said bar forming a face; and said insert has a face that lies against said bar face, at least one fastener-receiving hole, and at least one fastener projecting through said hole and into said bar face.

In a preferred embodiment the mount portion lies on the sides of an imaginary square so said mount portion has four flat locating sides, with each locating side extending precisely perpendicular to two other of said flat locating sides.

In one arrangement said outer edge and each of said opposite sides there is formed a cutting edge, each having an outer part having a radial length and a shape permitting cutting of a desired thread, and each having flanking sides forming finishing surfaces at radially inner parts of the cutting edge sides for finishing the tops of threads at a predetermined depth, wherein each of the locating sides intersects a respective one opposite side at a location spaced a radial distance from the finishing surface of the corresponding arm, the radial length plus the radial distance for each arm being less than half the length of each locating side.

The features of the invention are set forth in appended claim 1. Embodiments of the invention will be best understood from the following description when read in conjunction with the accompanying drawings.

### BRIEF DESCRIPTION OF THE DRAWINGS

Fig. 1 is an isometric view of a threading tool, which includes a threading insert embodying the present invention mounted on a tool holder.

Fig. 2 is a side elevation view of the threading tool of Fig. 1.

Fig. 3 is a side elevation view of the insert of Fig. 2.

Fig. 4 is an end view of the insert of Fig. 3.

Fig. 4A is an end view of the threading tool and insert of Fig. 1.

Fig. 5 is an enlarged partial side view of the insert of Fig. 3.

Fig. 5A is an enlarged sectional view of the insert of Fig. 4.

Fig. 6 is a side view of the insert of Fig. 3, shown mounted on an internal threading tool holder.

Fig. 7 is a view similar to that of Fig. 6, but showing the insert mounted on another internal threading tool holder which can be used for threading in bores of minimal diameter.

Fig. 8 is a side elevation view of the clamp of Fig. 2.

Fig. 9 is an end elevation view of the clamp of Fig. 8.

Fig. 10 is a top elevation view of the clamp of Fig. 9.

Fig. 11 is a side elevation view of a threading insert constructed in accordance with another embodiment of the invention.

Fig. 12 is a side elevation view of a threading insert constructed in accordance with another embodiment of the invention.

### DESCRIPTION OF THE PREFERRED EMBODIMENT

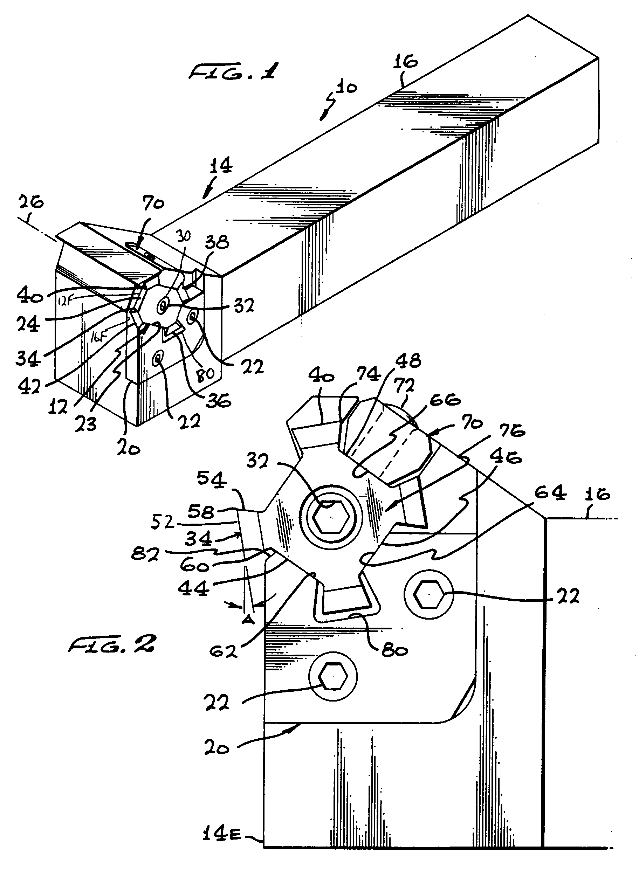

Fig. 1 illustrates a threading tool apparatus or tool 10 which includes a threading insert 12 mounted on a tool holder 14. The tool holder includes a bar 16 and a replaceable pocket wedge 20 that is mounted by bolts 22 on the bar and which has a recess 23 that receives the insert 12 and that supports it. The threading insert includes a mount portion 24 with an axis 26 and with a through hole 30 lying on the axis. A fastener 32 such as an Allen screw passes through the hole and is threadably joined to a hole in the tool holder 14 to hold face 12F of the insert against face 16F of the bar 16 closing the recess 23. The insert also has arms 34-40 that radiate from the mount portion 24 of the insert and which form cutting edges 42. The cutting edges 42 are all formed to cut threads in a workpiece.

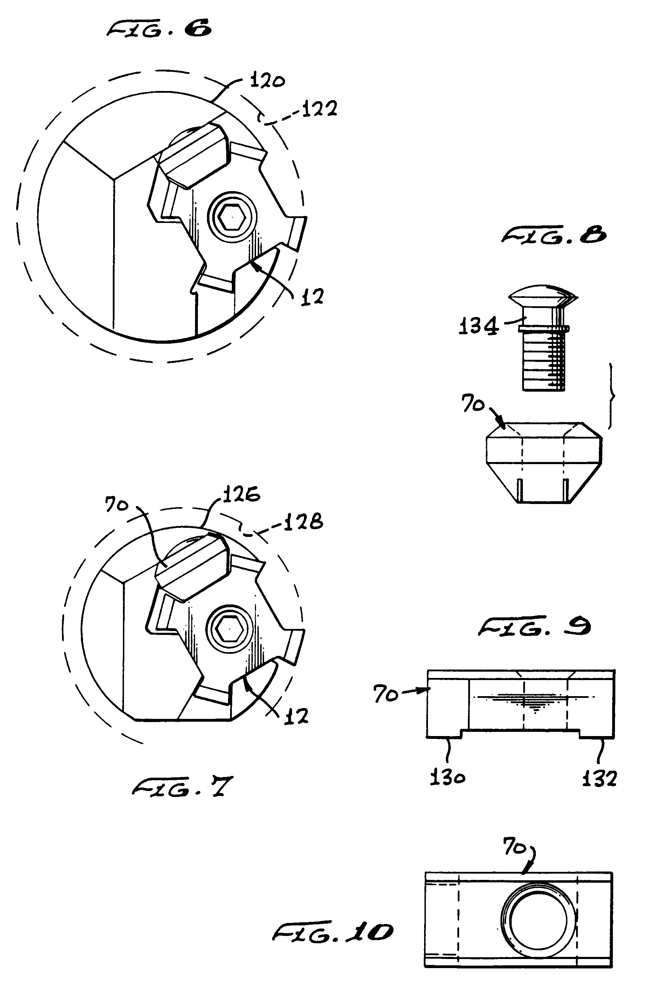

As shown in Fig. 3, the mount portion 24 of the insert forms four flat locating surfaces 42-48 at the periphery of the insert, thus shown straight in section, and each locating surface such as 44 is shown lying between a pair of arms 34, 36. The locating surfaces 42-48 lie on the sides of an imaginary square 50 (a polygon with four equal sides). Each arm such as 34 has a radially outer edge 52 and has first and second opposite sides 54, 56. The outer edge 52 has opposite ends and forms a first cutting edge 58 at the intersection of the first side 54 and the outer edge, and a second cutting edge 60 at the intersection of the second side 56 and the outer side. Thus, the insert forms eight cutting edges that are useful for cutting a thread in a workpiece.

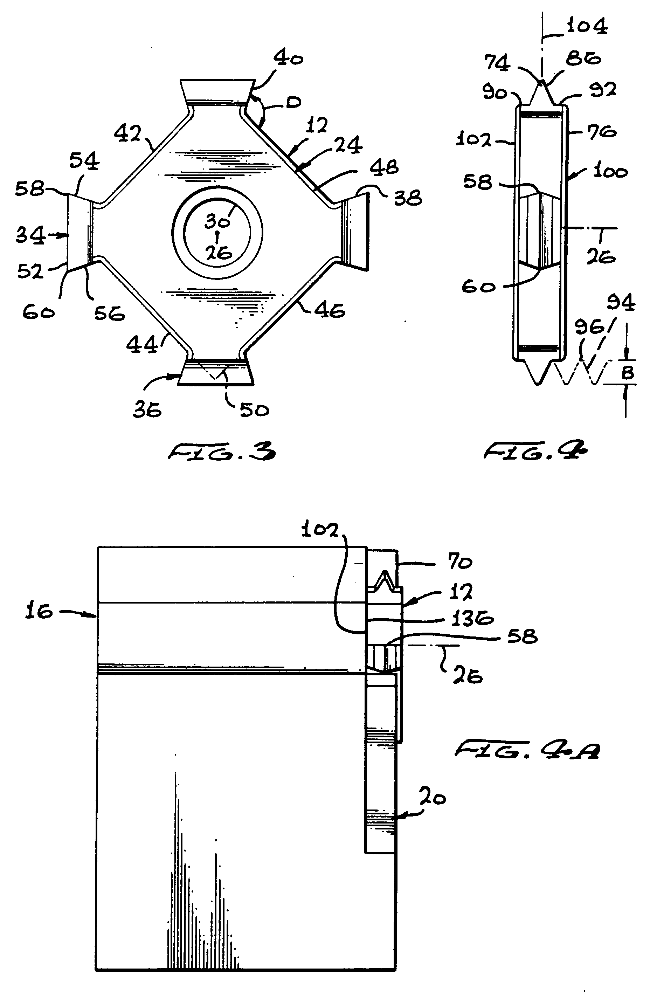

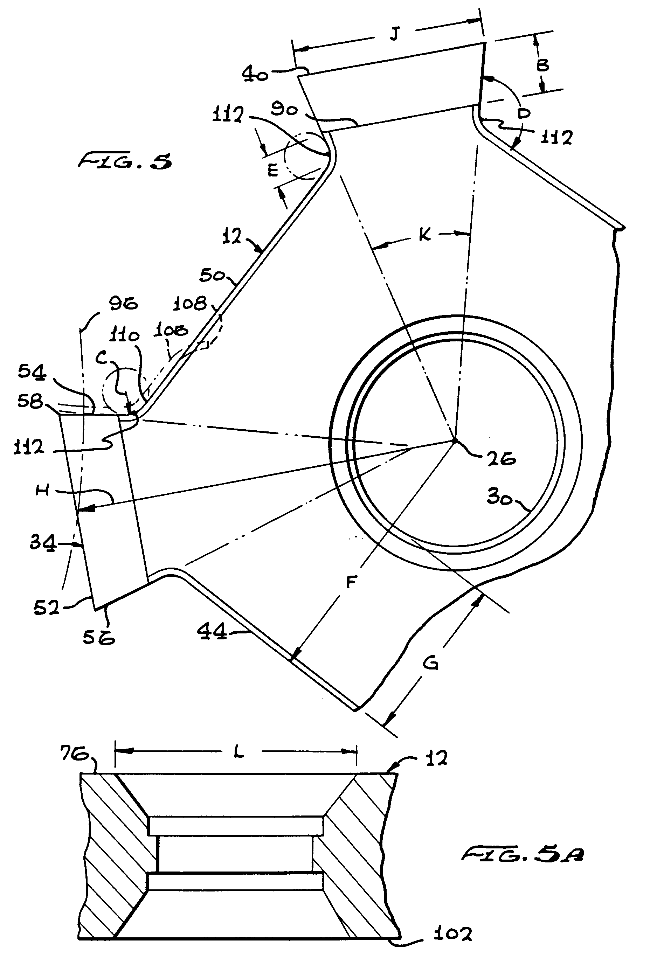

As shown in Fig. 2, the insert is mounted on the wedge 20 of the tool holder, with a cutting edge 58 projecting from a tool holder end 14E to cut a thread. The cutting edge 58 of arm 34 is uppermost and the opposite cutting edge 60 is lowermost. Normally, the first or upper side 54 is oriented horizontally, so that an extension of it passes through the axis of rotation of the workpiece which is held in a lathe. The outer edge 52 (or at least the portion immediately under the cutting edge) extends at an angle A of about 12-15° from the vertical, to provide a clearance angle that is necessary for efficient machining. The insert is located at a precise location on the wedge 20 of the tool holder by two flat positioning surfaces 62, 64 of the wedge that engage corresponding flat locating surfaces 44, 46 on the mount portion of the insert. Another positioning surface 66 is formed on a clamp 70 which can be operated to press the locating surface 48 on the insert against the opposite positioning surface 62 on the wedge, as by turning a clamp tightening screw 72. The tool holder holds the insert at a helix angle of 1.5° (depending on the relationship of thread pitch to workpiece diameter) to insure that the insert form is parallel to the helical thread.

When the cutting edge 58 of the insert becomes worn, the fastener 32 is removed and the clamp 70 loosened, to allow the insert to be removed. The insert is reinstalled with a cutting edge such as 74 of another arm 40 positioned where the cutting edge 58 of arm 34 was previously located. After four cutting edges have been worn, the next time the insert is removed it is flipped over so that its face 76 that previously faced away from the tool holder, now lies adjacent to the tool holder, so that four additional edges such as 60 can be used.

Whenever the insert is removed and reinstalled, it is important that the new cutting edge such as 74 lies in precisely the same position as the previous cutting edge such as 56. This allows precision threading to proceed without having to adjust the position of the tool holder 14. The insert is sufficiently precise to allow a new cutting edge to lie within 0.0127 mm (0.0005 inch) of the preceding one, which minimizes down time on CNC equipment. The insert 12 is formed with high precision, as by pressing particles of a hard material such as silicon carbide into a die and later sintering it. The wedge 20 is constructed with its two positioning surfaces 62,64 lying precisely perpendicular to one another.

The insert 12 is installed on the wedge 20 by positioning the insert so two of its locating surfaces such as 44, 46 lie against the positioning surfaces 62, 64. The clamp 70 is then tightened. It is not necessary that the clamp positioning surface 66 be precise, as its only function is to press the insert against the positioning surface 62. After the insert is clamped, the fastener 32 is tightened. It may be noted that it is not necessary to clamp the insert against the locating surface 64, as forces encountered during threading keep the insert pressed against the positioning surface 46. It is noted that the wedge has a cutout 80 for receiving one of the insert arms, without making contact with either the outer edge or either side of the arm.

The wedge 20 has only two precision surfaces, these being the positioning surfaces 62 and 64. These surfaces are easy to machine because they are both flat and precisely perpendicular to one another. For the same reason, it is easy to check the position of these surfaces, as by holding a machine square to them. The pocket wedge is a replaceable item, that is replaced by loosening the wedge bolts 22. After replacement of a wedge, the machine controls that are used to position the threading tool may have to be readjusted and measured. It is also common to not use a replacement pocket wedge, but instead to machine the bar 16 to directly hold the insert. It may be noted that with a working upper cutting edge at 58, the opposite or lower edge 60 of the arm is left unsupported, by leaving a space 82 below it. Applicant finds that such support is very seldom necessary, and by avoiding such support applicant avoids the need to provide a precision surface to intimately engage the lower side of the arm 34. Also, if there is very high pressure on the upper cutting edge 58 that will cause it to break, applicant prefers to allow it to break away to avoid damaging the workpiece or toolholder wedge, rather than to support the arm to prevent breaking away.

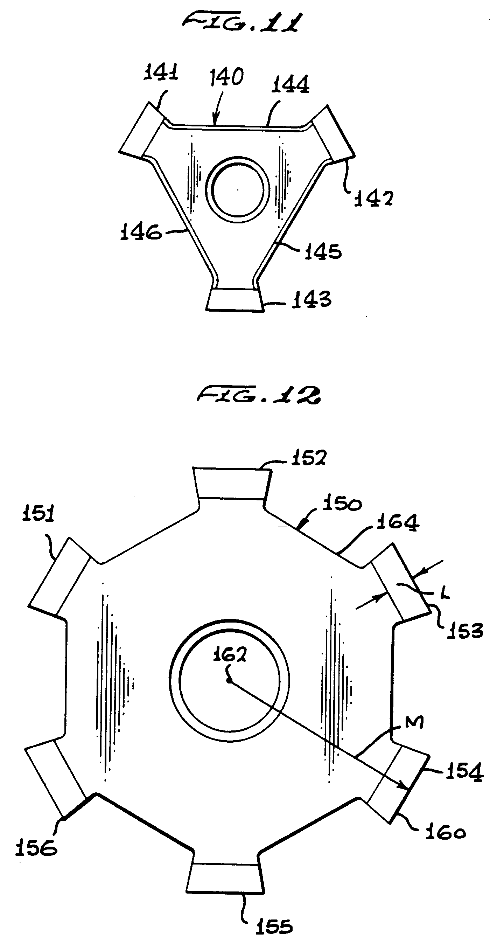

As shown in Fig. 4, each cutting edge such as 74 generally has a largely V-shaped outer part 86 (except when cutting square threads or the like) and has a pair of finishing sides 90, 92). Thus, the cutting edges of this insert are useful for cutting a thread 94 in a workpiece 96, where the thread has a predetermined depth B. The insert is in the form of a plate 100 with opposite faces 76, 102, and is formed symmetrically about a central plane 104 of the plate.

Fig. 5 shows the insert 12 cutting a thread in a workpiece 96, with the cutting edge 58 having cut to about half the depth of the final thread. The cutting operation generates a chip 106 which passes along the upper side 54 of the arm and onto the flat locating surface 50, the chip breaking at about the point 108 and falling off the insert. The insert has a transition 110 where the arm side 54 merges with the locating surface 50, which is of a small radius of curvature C and which has a center or intersection at the point 112. The angle D between a side of the arm and an adjacent flat surface is preferably more than 90° in order to prevent the chip from curling up and creating a ball of chips at the intersection. However, the angle D is preferably less than 180° to cause curvature in the chip so as to stress it and cause early breakage of the chip. The distance E between a finishing side 90 and the intersection 112 is preferably small, preferably less than the height B of the thread. As a result, the locating surface 50 is long and lies a considerable distance F from the axis 26 of the insert. For a center hole 30 of the insert of predetermined diameter (to hold a fastener of sufficient strength) this long distance F results in the insert having a considerable thickness G between the hole 30 and an adjacent locating surface such as 44, which minimizes the possibility of cracking of the insert. Also, the long locating surface facilitates secure positioning of the insert to resist turning due to the forces encountered during thread cutting. The distance F is preferably more than half the distance H between the axis of the insert and an outer edge, such as 52.

The outer edge such as 40 of each arm preferably has a relatively small width J so it subtends a relatively small angle K. The angle K is preferably no more than about 30° (i.e. less than 10% more, or in other words less than 33°). This results in long locating surfaces 50 between the arms. Also, this allows the insert to be used for internal threading in a hole of relatively small size. The total angle subtended by all arms is preferably no more than about one third of a full circle. It can be seen that the opposite sides 54, 56 of an arm 34 diverge in a radially outward direction (away from axis 26).

One insert applicant has designed, of the type shown in Figures 1-5, has a width 2H of about 19mm (0.745 inch), a plate thickness of about 4.34mm (0.171 inch), and locating surfaces lying in a square having sides 2F of about 11.7mm (0.460 inch). The angle K was equal to 28° and the width J of the outer edge of each arm was about 4.8mm (0.190 inch). The radius C of each transition was about 1.27mm (0.050 inch) and the distance E between a finishing side and the intersection 112 was about about 1.27 mm (0.050 inch). The outer diameter L of the hole 30 was 0.232D (about 5.9mm).

Fig. 6 illustrates the insert 12 being used on an internal tool holder 120 to cut a thread in a hole 122 in a workpiece. Fig. 7 illustrates the insert 12 on another internal tool holder 126 which is designed to enable the insert to be used to thread a smaller diameter hole 128.

Figs. 8-10 illustrate details of the clamp 70 which is used to clamp the insert in the tool holder of Figs. 1, 6, or 7. One end 130 of the clamp presses down against a locating surface on the insert, the opposite end 132 presses down against the tool holder and a screw 134 screws the clamp down to the tool holder.

As shown in Fig. 4A, the wedge 20 is slightly thinner than the insert 12. The insert face 102 presses against a flat face 136 of the bar 16. The bar surface 136 is angled by about 1 1/2° (38mm) to 2 1/2° (63.5mm) from the vertical to follow the helix of a thread. Applicant mounts about forty wedge blanks in the vise of a milling machine, machines the cutouts 80 of all wedges in the stack, and then precision grinds the positioning surfaces 62, 64 of all forty blanks in a stack. The grinding wheel is dressed, and then grinds both surfaces 62, 64 at the same time, with the projecting corner of the grinding wheel lying in the cutout 80.

Fig. 11 illustrates another insert 140 which uses the same general approach as for the insert of Fig. 3, except that the insert 140 has only three arms 141-143 to provide six cutting edges for threading. The insert 140 has three locating surfaces 144-146 lying on a regular (equal sides) polygon with three sides.

Fig. 12 illustrates another insert 150 which has six arms 151-156 resulting in twelve cutting edges useful for threading. The ratio of the height L of each cutting edge to the distance M between each outer edge 160 and the axis 162 of the insert, is approximately the same as for the insert of Fig. 5. The six arms subtend an angle of one third of a circle, resulting in each outer edge 160 being shorter. This results in less material of the insert under each cutting edge, so that the setup is not as rigid as an insert with fewer arms. There are six precision flat locating surfaces 164 that each extend between a pair of adjacent arms. The surfaces lie on the sides of an imaginary six-sided regular polygon.

Thus, the invention can provide a threading insert having numerous cutting edges, and which can be mounted with high precision in a tool holder of low cost. The insert includes a mount portion having a plurality of flat sides lying on the sides of an imaginary polygon with sides of equal length, and arms radiating outwardly from the corners of the polygon. Each arm has an outer edge and opposite sides, and forms a cutting edge at the intersection of each arm side with the outer edge. The intersection of each arm side with a flat locating surface, lies close to the cutting edge and there is an obtuse angle between each arm side and an adjacent flat locating surface. The total angle occupied by all arms is preferably no more than about one third of a full circle. The tool holder locates the insert on at least two of the flat locating surfaces, and does not support a side of an arm.

## Claims

1. Threading apparatus comprising an insert (12; 140; 150) having a mount portion (24) with at least three locating sides (42-48; 144-146; 164) lying on the sides of an imaginary regular polygon that has an axis (26), said insert having a radially outwardly extending arm (34-40; 141-143; 151-156) at each of the corners of said imaginary polygon, with each arm having an outer edge (52) characterised in that each arm (34-40; 141-143; 151-156) has a pair of opposite arm sides (54,56) that extend in a substantially radially outward direction from the axis of said polygon; in that each locating side (42-48; 144-146; 164) is flat; and in that the length of each of said flat locating sides (42-48; 144-146; 164) is more than 150% of the length of each of said opposite sides (54,56) of said arms.

2. Threading apparatus according to claim 1 including a tool holder (14; 120; 126) for holding said insert, wherein said tool holder has walls forming at least two flat positioning surfaces (62,64) that abut first and second of said flat insert sides and said tool holder having a clamp (70) with a clamp surface (66) that presses against a third of said flat insert positioning surfaces.

3. Threading apparatus according to claim 2 wherein said tool holder (14) has an outer end (14E) for lying adjacent to a workpiece (96) to be threaded, and has a recess (23) extending to said outer end; a first (34) of said arms of said insert projects beyond said tool holder outer end, said first arm having an upper arm side (54) forming a cutting edge (58) for the workpiece to be threaded and a lower arm side (56); and said tool holder is spaced (82) from said lower arm side to leave said lower arm side unsupported.

4. Threading apparatus according to claim 2 or claim 3 wherein said tool holder (14) includes a bar (16) and a pocket wedge (20) mounted on said bar, said wedge having a thickness about the same as the thickness of said insert (12) and forming said positioning surfaces (62,64), and said bar (16) forming a face (16F); and said insert has a face (12F) that lies against said bar face (16F), at least one fastener-receiving hole (30), and at least one fastener (22) projecting through said hole (30) and into said bar face (16F).

5. Threading apparatus according to any preceding claim wherein said mount portion (24) lies on the sides of an imaginary square (50) so that said mount portion has four flat locating sides, with each locating side extending precisely perpendicular to two other of said flat locating sides.

6. Threading apparatus according to any preceding claim in which at the intersection of said outer edge (52) and each of said opposite sides (54,56) there is formed a cutting edge (58,60), each having an outer part (86) having a radial length (B) and a shape permitting cutting of a desired thread, and each having flanking sides forming finishing surfaces (92,94) at radially inner parts of the cutting edge sides for finishing the tops of threads at a predetermined depth, wherein each of the locating sides (42-48; 144-146; 164) intersects a respective one opposite side (54,56) at a location spaced a radial distance (E) from the finishing surface (92,94) of the corresponding arm, the radial length (B) plus the radial distance (E) for each arm being less than half the length of each locating side (42-48; 144-146; 164).

## Patentansprüche

1. Gewindeschneidvorrichtung, umfassend einen Einsatz (12; 140; 150) mit einem Montageabschnitt (24) mit zumindest drei Auflageseiten (42-48; 144-146; 164), die auf den Seiten eines imaginären regelmäßigen Polygons liegen, das eine Achse (26) besitzt, wobei der Einsatz einen sich radial nach außen erstreckenden Arm (34-40; 141-143; 151-156) in jeder der Ecken des imaginären Polygons besitzt, wobei jeder Arm eine Außenkante (52) aufweist, dadurch gekennzeichnet, daß jeder Arm (34-40; 141-143; 151-156) ein Paar gegenüberliegender Armseiten (54, 56) besitzt, die sich in im wesentlichen radial nach außen verlaufender Richtung von der Achse des Polygons erstrecken; daß jede Auflageseite (42-48; 144-146; 164) flach ist; und daß die Länge jeder der flachen Auflageseiten (42-48; 144-146; 164) mehr als 150% der Länge jeder der gegenüberliegenden Seiten (54, 56) der Arme ausmacht.

2. Gewindeschneidvorrichtung nach Anspruch 1, umfassend eine Werkzeughalterung (14; 120; 126) zum Halten des Einsatzes, worin die Werkzeughalterung Wände besitzt, die zumindest zwei flache Positionierungsflächen (62, 64) bilden, die an einer ersten und zweiten flachen Einsatzseite anliegen, und der Werkzeughalter eine Klemme (70) mit einer Klemmfläche (66) besitzt, die gegen eine dritte flache Einsatzpositionierungsfläche preßt.

3. Gewindeschneidvorrichtung nach Anspruch 2, worin die Werkzeughalterung (14) ein äußeres Ende (14E) besitzt, um angrenzend zu einem Werkstück (96), in das ein Gewinde einzuschneiden ist, zu liegen, und weiters eine Ausnehmung (23) aufweist, die sich zum äußeren Ende erstreckt; ein erster (34) der Arme des Einsatzes über das äußere Ende der Werkzeughalterung hinausragt, wobei der erste Arm eine obere Armseite (54), die eine Schneidkante (58) für das Werkstück bildet, in das ein Gewinde einzuschneiden ist, und eine untere Armseite (56) aufweist; und die Werkzeughalterung von der unteren Armseite beabstandet (82) ist, sodaß die untere Armseite ungestützt bleibt.

4. Gewindeschneidvorrichtung nach Anspruch 2 oder Anspruch 3, worin die Werkzeughalterung (14) eine Stange (16) und einen auf der Stange montierten Taschenkeil (20) umfaßt, wobei der Keil etwa die gleiche Dicke besitzt wie der Einsatz (12) und die Positionierungsflächen (62, 64) bildet und die Stange (16) eine Vorderfläche (16F) bildet; und der Einsatz eine Vorderfläche (12F), die gegen die Stangenvorderfläche (16F) anliegt, zumindest ein Loch (30) zur Aufnahme eines Befestigungselements und zumindest ein Befestigungselement (22) enthält, das durch das Loch (30) und in die Stangenvorderfläche (16F) hineinragt.

5. Gewindeschneidvorrichtung nach einem der vorhergehenden Ansprüche, worin der Montageabschnitt (24) auf den Seiten eines imaginären Quadrats (50) liegt, sodaß der Montageabschnitt vier flache Auflageseiten besitzt, wobei sich jede Auflageseite genau im rechten Winkel zu zwei anderen flachen Auflageseiten erstreckt.

6. Gewindeschneidvorrichtung nach einem der vorhergehenden Ansprüche, worin an der Schnittlinie der Außenkante (52) und jeder der gegenüberliegenden Seiten (54, 56) eine Schneidkante (58, 60) ausgebildet ist, wobei jede einen Außenteil (86) mit einer radialen Länge (B) und einer Form besitzt, die das Schneiden eines erwünschten Gewindes ermöglicht, und jede Flankenseiten besitzt, die Endbearbeitungsflächen (92, 94) an radial innen angeordneten Teilen der Schneidkantenseiten zum Endbearbeiten der Spitzen der Gewinde in einer vorbestimmten Tiefe bilden, worin jede der Auflageseiten (42-48; 144-146; 164) eine jeweilige gegenüberliegende Seite (54, 56) an einer Stelle schneidet, die in einem radialen Abstand (E) von der Endbearbeitungsfläche (92, 94) des korrespondierenden Arms entfernt ist, wobei die radiale Länge (B) plus der radiale Abstand (E) für jeden Arm weniger als die Hälfte der Länge jeder Auflageseite (42-48; 144-146; 164) ausmachen.

## Revendications

1. Appareil à fileter comprenant un insert (12 ; 140 ; 150) présentant une portion de montage (24) avec au moins trois côtés de localisation (42-48 ; 144-146 ; 164) situés sur les côtés d'un polygone régulier imaginaire qui a un axe (26), ledit insert ayant un bras s'étendant radialement vers l'extérieur (34-40 ; 141-143 ; 151-156) à chacun des coins dudit polygone imaginaire, chaque bras ayant un bord extérieur (52), caractérisé en ce que chaque bras (34-40 ; 141-143 ; 151-156) a une paire de côtés de bras opposés (54, 56) qui s'étendent dans une direction sensiblement radialement vers l'extérieur depuis l'axe dudit polygone ; en ce que chaque côté de localisation (42-48 ; 144-146 ; 164) est plat ; et en ce que la longueur de chacun desdits côtés de localisation plats (42-48 ; 144-146 ; 164) représente plus que 150% de la longueur de chacun desdits côtés opposés (54, 56) desdits bras.

2. Appareil à fileter selon la revendication 1, incluant un porte-plaquette (14 ; 120 ; 126) pour tenir ledit insert, dans lequel ledit porte-plaquette a des parois formant au moins deux surfaces de positionnement plates (62, 64) qui butent contre les premier et deuxième desdits côtés d'insert plats, et ledit porte-plaquette ayant un organe de serrage (70) avec une surface de serrage (66) qui exerce une pression contre une troisième desdites surfaces de positionnement d'insert plates.

3. Appareil à fileter selon la revendication 2, dans lequel ledit porte-plaquette (14) a une extrémité extérieure (14E) prévue pour être adjacente à une pièce d'oeuvre (96) à fileter et un évidement (23) s'étendant à ladite extrémité extérieure ; un premier (34) desdits bras dudit insert fait saillie au-delà de ladite extrémité extérieure de porte-plaquette, ledit premier bras ayant un côté de bras supérieur (54) formant un bord coupant (58) pour la pièce à fileter et un côté de bras inférieur (56) ; et ledit porte-plaquette est espacé (82) dudit côté de bras inférieur pour que ledit côté de bras inférieur reste à l'état non supporté.

4. Appareil à fileter selon la revendication 2 ou la revendication 3, dans lequel ledit porte-plaquette (14) inclut une barre (16) et un coin de poche (20) monté sur ladite barre, ledit coin ayant une épaisseur qui est environ la même que l'épaisseur dudit insert (12) et formant lesdites surfaces de positionnement (62, 64) et ladite barre (16) formant une face (16F) ; et ledit insert a une face (12F) qui s'applique contre ladite face de barre (16F), au moins un trou de réception d'attache (30) et au moins une attache (22) faisant saillie à travers ledit trou (30) et dans ladite face de barre (16F).

5. Appareil à fileter selon l'une des revendications précédentes, dans lequel ladite portion de montage (24) se situe sur les côtés d'un carré imaginaire (50) de telle sorte que ladite portion de montage a quatre côtés de localisation plats, chaque côté de localisation s'étendant d'une manière précise perpendiculairement à deux autres desdits côtés de localisation plats.

6. Appareil à fileter selon l'une des revendications précédentes, dans lequel à l'intersection dudit bord extérieur (52) et de chacun desdits côtés opposés (54, 56), il est formé un bord coupant (58, 60), chacun ayant une partie extérieure (86) d'une longueur radiale (B) et d'une forme permettant la coupe d'un filet à obtenir, et chacun ayant des côtés de flanc formant des surfaces de finition (92, 94) à des parties radialement intérieures des côtés de bord de coupe pour finir le dessus des filets à une profondeur prédéterminée, dans lequel chacun des côtés de localisation (42-48 ; 144-146 ; 164) forme une intersection avec un côté respectif opposé (54, 56) à une localisation espacée d'une distance radiale (E) de la surface de finition (92, 94) du bras correspondant, la longueur radiale (B) plus la distance radiale (E) pour chaque bras étant inférieure à la moitié de la longueur de chaque côté de localisation (42-48 ; 144-146 ; 164).
